(19) Europäisches Patentamt / European Patent Office / Office européen des brevets

(11) **EP 3 120 012 B1**

(12) **FASCICULE DE BREVET EUROPEEN**

(45) Date de publication et mention de la délivrance du brevet:
**02.05.2018 Bulletin 2018/18**

(21) Numéro de dépôt: **15709263.6**

(22) Date de dépôt: **17.02.2015**

(51) Int Cl.:
*F02N 11/10* (2006.01)          *F02N 11/08* (2006.01)
*H02P 29/02* (2016.01)          *H02K 11/00* (2016.01)
*H02P 29/60* (2016.01)

(86) Numéro de dépôt international:
**PCT/FR2015/050379**

(87) Numéro de publication internationale:
**WO 2015/140432 (24.09.2015 Gazette 2015/38)**

(54) **PROCÉDÉ DE GESTION DU FONCTIONNEMENT D'UN DEMARREUR D'UN MOTEUR THERMIQUE AFIN D'ÉVITER UNE ÉVENTUELLE SURCHAUFFE PENDANT LE DÉMARRAGE**

VERFAHREN ZUR STEUERUNG DES BETRIEBS EINES ANLASSERS EINES VERBRENNUNGSMOTORS UM EINE MÖGLICHE ÜBERHITZUNG BEIM START ZU VERMEIDEN

METHOD OF CONTROLLING OPERATION OF A STARTER OF A COMBUSTION ENGINE IN ORDER TO PREVENT A POSSIBLE OVERHEAT DURING THE START

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.03.2014 FR 1452165**

(43) Date de publication de la demande:
**25.01.2017 Bulletin 2017/04**

(73) Titulaire: **PSA Automobiles SA
78300 Poissy (FR)**

(72) Inventeurs:
• **BOTCHON, Yannick**
  **F-92160 Antony (FR)**
• **MORNET, Mickael**
  **F-78330 Fontenay Le Fleury (FR)**
• **MALLET, Aurelien**
  **F-69100 Villeurbanne (FR)**

(56) Documents cités:
WO-A1-2011/121195          DE-A1-102006 039 112
DE-A1-102007 015 236          DE-A1-102010 038 601
FR-A1- 2 908 477          US-A1- 2013 090 791

**Description**

L'invention a trait au domaine de la thermique d'un démarreur dans un véhicule automobile.

Plus particulièrement, l'invention se rapporte à procédé et un système permettant de prédire le temps restant d'activation/de fonctionnement d'un démarreur avant une éventuelle surchauffe. L'invention se rapporte en outre, à un véhicule automobile équipé d'un tel système.

La gestion de la température des démarreurs dans les véhicules automobile constitue un enjeu majeur chez les constructeurs. De manière générale, un démarreur peut s'échauffer fortement lors des phases de démarrage et de redémarrage d'un véhicule. Une durée prolongée d'activation d'un démarreur engendre une montée en température importante de celui-ci, risquant d'impacter son fonctionnement et/ou sa durée de vie. Ce risque s'applique encore d'avantage aux véhicules munis de systèmes d'arrêts et de redémarrages automatiques (encore désignés systèmes « Stop-and-Start » selon la terminologie anglaise). Dans ces systèmes, le démarreur est piloté pour redémarrer automatiquement le moteur thermique, à la suite d'un arrêt du véhicule et de son moteur. Des situations de redémarrages répétés et faiblement espacées dans le temps sollicitent fortement le démarreur. Il s'avère donc particulièrement nécessaire d'envisager des stratégies permettant de gérer les démarreurs, afin de les protéger d'une éventuelle surchauffe.

Le document DE10347683 propose une stratégie d'inhibition de la fonction d'arrêts et de redémarrages automatiques, lorsque la température de l'électronique de puissance d'un alterno-démarreur dépasse une valeur seuil. L'électronique de puissance est préférentiellement réalisée via des transistors MOS, utilisés comme éléments semi-conducteurs de commutation. La température des composants électroniques est déterminée via une mesure directe effectuée par un capteur, ou alternativement déduite en fonction d'une température ambiante ou d'une température de liquide de refroidissement, relative à un système de refroidissement de l'alterno-démarreur. Cependant, pour cette technique, la mise en oeuvre d'une stratégie d'inhibition de la fonction d'arrêts et de redémarrages automatiques se limite à considérer les limites en températures autorisées du démarreur. Cela suppose qu'une inhibition de cette fonction résulte de l'atteinte potentielle d'une température critique du démarreur. Le document DE 10 2007 015236 A1 propose aussi une stratégie d'inhibition du démarrage pour éviter que la valeur estimée de la température du démarreur après le démarrage ne dépasse une certaine valeur de température.

L'invention proposée a pour but de remédier aux problèmes précités en proposant un procédé selon la revendication 1.

L'effet technique est de permettre de déterminer le temps restant d'activation d'un démarreur avant l'atteinte d'une température critique engendrant sa surchauffe et de sécuriser le démarrage du véhicule.

Avantageusement, ce temps restant est donné par la quantité suivante : $\dfrac{1}{B} Ln\left(\dfrac{T_2 - C}{T_1 - C}\right),$ où $Ln$, $T_2$, et $T_1$ désignent, respectivement, le logarithme népérien, la deuxième valeur de température et la première valeur de température.

Avantageusement, ce procédé comprend une étape de mesure de la première valeur de température ($T_1$) par un capteur disposé au niveau dudit point du démarreur.

Avantageusement, ce procédé comprend une étape d'estimation de la première valeur de température ($T_1$) selon un modèle de prédiction de la température audit point du démarreur.

Avantageusement, dans ce procédé :

- le coefficient thermique A est égal à $(T_1 - C)e^{-Bt_1}$, $T_1$ étant la première valeur de température à l'instant $t_1$ ;

- le coefficient thermique B est égal à $-\dfrac{1}{C_{balai}}\left[\dfrac{1}{R_{rotor}} + \dfrac{1}{R_{stator}}\right]$ où

  ○ $C_{balai}$ est la capacité thermique des balais du démarreur,
  ○ $R_{rotor}$ est la résistance thermique du rotor du démarreur, et
  ○ $R_{stator}$ est la résistance thermique du stator du démarreur,

- le coefficient thermique C est égal à $-\dfrac{\left(\dfrac{T_{rotor\_ini}}{R_{rotor}C_{balai}} + \dfrac{T_{stator\_ini}}{R_{stator}C_{balai}} + \dfrac{P_{balai}}{C_{balai}} \cdot iact\right)}{B}$ où

  ○ $P_{balai}$ est la puissance thermique des balais,
  ○ $iact=0$ lorsque le démarreur est éteint, et $iact=1$ lorsque le démarreur est activé ; et

∘ $T_{rotor\_ini}$ et $T_{stator\_ini}$ étant, respectivement, une température initiale prédéterminée du rotor du démarreur et une température initiale prédéterminée du stator du démarreur.

Avantageusement, ce procédé comprend une étape d'estimation de la première valeur de température ($T_1$) selon un modèle de prédiction de la température audit point du démarreur.

Avantageusement, dans ce procédé, $T_{rotor\_ini}$ et $T_{stator\_ini}$ sont égales à la température d'un moteur thermique associé au démarreur.

Avantageusement, dans ce procédé, les coefficients thermiques sont préétablis à différentes valeurs de températures dudit point du démarreur.

Avantageusement, dans ce procédé, la température en un point du démarreur est la température des balais du démarreur.

Avantageusement, dans ce procédé, ladite deuxième valeur de température est la température de surchauffe du démarreur.

Selon un deuxième aspect, il est proposé un système de gestion du fonctionnement d'un démarreur selon la revendication 10.

Avantageusement, ce temps restant est donné par la quantité suivante : $\dfrac{1}{B} Ln\left(\dfrac{T_2 - C}{T_1 - C}\right),$ où $Ln$, $T_2$, et $T_1$ désignent, respectivement, le logarithme népérien, la deuxième valeur de température et la première valeur de température.

D'autres objets et avantages de l'invention apparaîtront à la lumière de la description de modes de réalisations, faite ci-après en référence aux dessins annexés dans lesquels

- la figure 1 illustre un système de prédiction de la durée d'activation restante d'un démarreur avant l'atteinte d'une température critique selon un mode de réalisation ;
- la figure 2 illustre un circuit équivalent d'un modèle thermique d'un démarreur selon un mode de réalisation.

Il est entendu que les modes de réalisations décrits par la suite concernent aussi bien un démarreur, un alterno-démarreur et plus généralement tout dispositif apte à démarrer/redémarrer un moteur thermique d'un véhicule automobile.

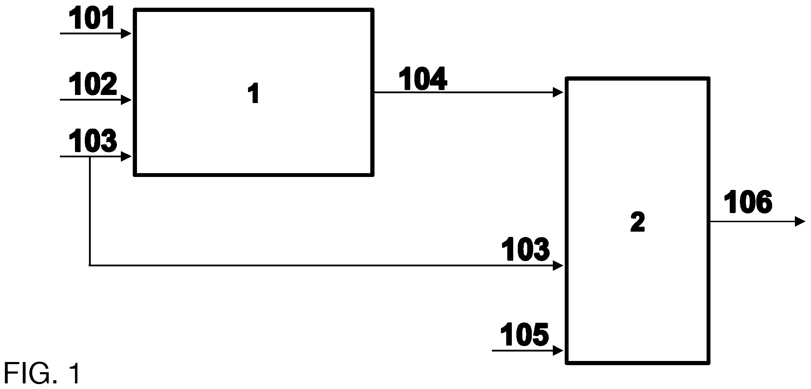

Sur la figure 1 est représenté un système de prédiction de la durée d'activation restante d'un démarreur avant l'atteinte d'une température critique correspondant à sa surchauffe. Dans ce système, un premier module 1 comprend un modèle analytique préétabli d'évolution thermique du démarreur. Les paramètres caractéristiques de ce modèle sont des constantes de temps thermiques et/ou des coefficients modélisant les pertes thermiques du démarreur et représentatives de son échauffement. Ces paramètres évoluent temporellement en fonction de la température du démarreur. Avantageusement, l'ensemble des paramètres caractéristiques du modèle sont calculés par le premier module 1 en fonction des entrées suivantes :

- une information de température 101 $T_{co}$ relative à l'état thermique du moteur thermique, par exemple la température du liquide du refroidissement du moteur (ex : eau). Cette entrée est un paramètre standard contrôlé par le système de diagnostic embarqué du véhicule ;
- le statut d'activité du démarreur 102 (éteint ou activé), pouvant à titre d'exemple être fourni par un système de contrôle du véhicule. Cette information permet, notamment, au modèle thermique de déterminer un réchauffement (statut activé) ou un refroidissement (statut éteint) du démarreur ;
- les températures du démarreur 103, décrivant son état thermique, au moment du calcul des paramètres caractéristiques du modèle analytique.

Selon un mode de réalisation, les températures du démarreur 103 sont déterminées via des mesures physiques de températures effectuées par un ou plusieurs capteurs disposés dans le démarreur. Selon un autre mode de réalisation, les températures du démarreur sont déterminées selon un modèle de prédiction de températures disponible dans l'état de la technique.

Selon un mode de réalisation, basés sur les entrées 101, 102, 103 du premier module 1, les paramètres caractéristiques 104 du modèle thermique sont calculés à l'aide d'équations préenregistrées. Ces équations se rapportent à des modèles thermiques préalablement établis, relatifs aux constantes thermiques et/ou aux coefficients thermiques.

Selon un autre mode de réalisation, les valeurs des paramètres caractéristiques 104 sont déterminées en fonction des entrées 101, 102, 103 du premier module 1 via une étape de comparaison des valeurs de ces entrées avec des tables de mesures préétablies relatives aux paramètres caractéristiques 104.

Les paramètres caractéristiques 104 calculés/déterminés sont ensuite retournés en sortie du premier module 1 et utilisés comme entrées d'un deuxième module 2.

Le deuxième module 2 comprend comme entrées :

- les températures du démarreur 103 au moment du calcul des paramètres caractéristiques 104 du modèle analytique ;
- les paramètres caractéristiques 104 du modèle thermique, calculés précédemment par le premier module 1 ;
- une valeur de température critique 105 à ne pas dépasser. Cette valeur de température critique 105 est une valeur seuil prédéterminée, pouvant par exemple être choisie en fonction d'un modèle thermique du démarreur existant.

Avantageusement, le deuxième module 2 utilise un algorithme préconfiguré, basé sur le modèle analytique d'évolution thermique proposé pour le premier module 1. Plus particulièrement, le deuxième module 2 applique l'algorithme préconfiguré aux entrées 103, 104, 105 pour prédire le temps restant 106 d'activation du démarreur avant l'atteinte de la température critique 105. Un mode de réalisation de cet algorithme est développé ultérieurement.

Les paramètres caractéristiques 104 calculés par le premier module 1 sont des paramètres régissant des équations différentielles, décrivant l'évolution des températures caractéristiques du démarreur à chaque instant. Ainsi, connaissant les températures du démarreur 103 et les paramètres caractéristiques 104 du modèle thermique à chaque instant, le deuxième module 2 est capable de résoudre ces équations pour en déduire un intervalle de temps séparant une activation à un temps déterminé du démarreur et l'atteinte de la température critique 105 caractérisant la surchauffe du démarreur. Le deuxième module 2 permet ainsi de prédire une durée d'activation restante 105 du démarreur avant un éventuel échauffement. Cette durée varie dynamiquement, et est fonction de la température du démarreur ainsi que de son instant d'activation, ainsi

- lorsque le démarreur n'est pas activé, celui-ci refroidit et la durée d'activation restante 105 avant échauffement augmente ;
- lors de l'activation du démarreur, lors d'un démarrage/redémarrage du véhicule, la température du démarreur température croit, et la durée d'activation restante 105 avant surchauffe décroit logiquement au fur et à mesure que la température du démarreur se rapproche de la température critique.

Avantageusement, le premier module 1 et le deuxième module 2 sont réalisés via un ensemble d'instructions logicielles programmées sur un support approprié tel un processeur. Avantageusement, ces modules sont compris dans un calculateur du véhicule automobile.

Selon divers modes de réalisations, basé sur le calcul à chaque instant de la durée d'activation restante 105 avant échauffement, une stratégie de gestion du démarreur est mise en oeuvre afin de le préserver. A titre d'exemple, en fonction des conditions météorologiques (températures extérieures) et de l'état de charge de la batterie du véhicule, il est possible de déterminer à l'avance, par mesures ou simulations, des modèles de durées de démarrages/redémarrages pour ces conditions, et donc des temps d'activations du démarreur nécessaires. Basé sur une comparaison de la durée d'activation restante 106 du démarreur avant échauffement, et sur la connaissance des temps nécessaires d'activation du démarreur dans une situation déterminée, il est par exemple possible de permettre ou inhiber l'arrêt du moteur thermique du véhicule lors de l'utilisation d'une stratégie d'arrêts et de redémarrages automatiques « Stop-and-Start ». Avantageusement, la température critique 105 se rapportant à une surchauffe du démarreur n'est jamais ainsi atteinte, car l'on veille à utiliser le démarreur, c'est-à-dire choisir sa durée d'activation, pour une période inférieure au temps restant avant sont échauffement.

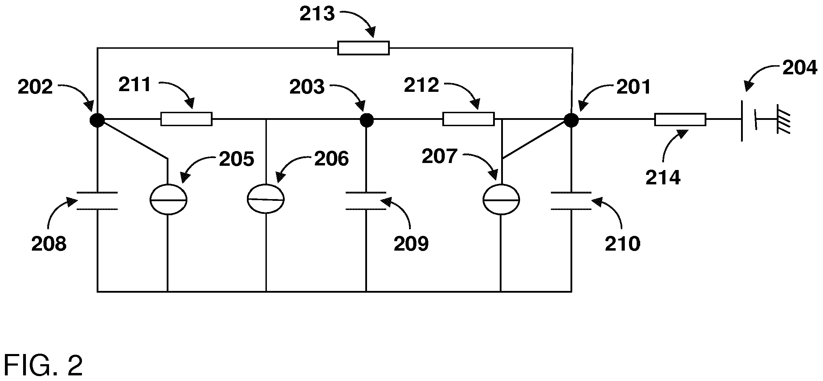

La figure 2, illustre un circuit équivalent d'un modèle thermique du démarreur d'un moteur thermique. Ce modèle considère une température 204 $T_{co}$ caractérisant l'état thermique du moteur thermique, par exemple la température du liquide du refroidissement du moteur, ainsi que les températures d'éléments caractéristiques constitutifs du démarreur à savoir :

- la température du stator 201 $T_{stator}$ du démarreur ;
- la température du rotor 202 $T_{rotor}$ du démarreur ;
- la température des balais 203 $T_{balai}$ du démarreur.

Dans ce modèle le stator, le rotor et les balais du démarreur sont par ailleurs modélisés par les grandeurs suivantes :

- des sources de chaleurs modélisant des pertes énergétiques dans le démarreur

  ∘ la puissance thermique du rotor 205 $P_{rotor}$ (pertes par frottements secs ou visqueux) ;
  ∘ la puissance thermique des balais 206 $P_{balais}$ (pertes magnétiques) ;

◦ la puissance thermique du stator 207 $P_{stator}$ (pertes d'énergie par effet Joule) ;

- des capacités thermiques

  ◦ capacité thermique du rotor 208 $C_{rotor}$ ;
  ◦ capacité thermique des balais 209 $C_{balai}$ ;
  ◦ capacité thermique du stator 210 $C_{stator}$ ;

- des résistances thermiques

  ◦ résistance thermique du rotor 211 $R_{rotor}$ ;
  ◦ résistance thermique du stator 212 $R_{stator}$ ;

En outre, des transferts de chaleurs par convection au sein du démarreur sont modélisés par

- une résistance thermique 213 $R_{conv1}$, se rapportant aux transferts de chaleurs dans l'entrefer du démarreur (espace vide entre le rotor et le stator) ;
- une résistance thermique 214 $R_{conv2}$ se rapportant aux transferts de chaleurs entre la culasse du démarreur et le moteur thermique du véhicule.

A partir du modèle de la figure 2, la dynamique thermique du démarreur peut alors être modélisée par le système d'équations différentielles ci-dessous :

$$\begin{bmatrix} \dot{T}_{rotor} \\ \dot{T}_{stator} \\ \dot{T}_{balai} \end{bmatrix} = \begin{bmatrix} -\tau_1 & \tau_2 & \tau_{rotor} \\ \tau_4 & -\tau_3 & \tau_{stator} \\ \tau_6 & \tau_8 & -\tau_7 \end{bmatrix} \begin{bmatrix} T_{rotor} \\ T_{stator} \\ T_{balai} \end{bmatrix} + \begin{bmatrix} 0 \\ \tau_5 \\ 0 \end{bmatrix} T_{co} + \begin{bmatrix} coeff1 \\ coeff2 \\ coeff3 \end{bmatrix} \cdot iact$$

, où $\begin{bmatrix} \dot{T}_{rotor} \\ \dot{T}_{stator} \\ \dot{T}_{balai} \end{bmatrix}$ sont les dérivées temporelles des températures $\begin{bmatrix} T_{rotor} \\ T_{stator} \\ T_{balai} \end{bmatrix}$ du rotor, du stator et des balais ; et où les notations suivantes ont été introduites :

$$\tau_1 = \frac{1}{C_{rotor}} \left[ \frac{1}{R_{rotor}} + \frac{1}{R_{conv1}} \right], \ \tau_2 = \frac{1}{R_{conv1} C_{rotor}}, \ \tau_3 = \frac{1}{C_{stator}} \left[ \frac{1}{R_{stator}} + \frac{1}{R_{conv1}} + \frac{1}{R_{conv2}} \right],$$

$$\tau_4 = \frac{1}{R_{conv1} C_{stator}}, \tau_5 = \frac{1}{R_{conv2} C_{stator}}, \tau_6 = \frac{1}{R_{rotor} C_{balai}}, \ \tau_7 = \frac{1}{C_{balai}} \left[ \frac{1}{R_{rotor}} + \frac{1}{R_{stator}} \right]$$

$$\tau_8 = \frac{1}{R_{stator} C_{balai}}, \ \tau_{stator} = \frac{1}{R_{stator} C_{stator}}, \tau_{rotor} = \frac{1}{R_{rotor} C_{rotor}},$$

$$coeff_1 = \frac{P_{rotor}}{C_{rotor}}, coeff_2 = \frac{P_{stator}}{C_{stator}}, \ coeff_3 = \frac{P_{balai}}{C_{balai}},$$

et $iact = \begin{vmatrix} 0 \\ 1 \end{vmatrix}$ est une variable permettant de distinguer le cas où :

- le démarreur est éteint (non-génération de pertes) : iact=0 ;
- le démarreur est activé (pertes thermiques générées) : iact =1.

Selon divers modes de réalisations, l'ensemble des paramètres ($\tau_1$, $\tau_2$, $\tau_3$, $\tau_4$, $\tau_5$, $\tau_6$, $\tau_7$, $\tau_8$, $\tau_{rotor}$, $\tau_{stator}$, coeff1, coeff2, coeff3) du modèle équivalent proposé en figure 2, sont identifiés au préalable pour une plage de température du démarreur, par exemple dans l'intervalle [30°c, +200°C]. La variable iact est quant à elle déterminée en fonction du statut d'activité du démarreur 102 fournie en entrée du premier module 1.

Un certain nombre de ces paramètres, comme les résistances et les capacités thermiques évoluent ensuite dynamiquement en fonction des températures estimées du démarreur. Ainsi on observe les dépendances en températures « f() » suivantes pour :

- les résistances thermiques

$$R_{rotor} = f\,(T_{rotor}, T_{balai})\;,\;\; R_{stator} = f\,(T_{balai}, T_{stator})$$

$$R_{conv1} = f\,(T_{rotor}, T_{stator})\;,\;\; R_{conv2} = f\,(T_{stator}, T_{co})\;;$$

- les capacités thermiques

$$C_{rotor} = f\,(T_{rotor})\;,\; C_{balai} = f\,(T_{balai})\;,\; C_{stator} = f\,(T_{stator})\;;$$

- les coefficients liés aux pertes, qui dépendent des capacités thermiques

$$coeff_1 = f\,(T_{rotor})\;,\; coeff_2 = f\,(T_{stator})\;,\; coeff_3 = f\,(T_{balai})\;.$$

Selon divers modes de réalisations, afin d'initialiser ces paramètres, puis de mettre à jour dynamiquement leurs valeurs en fonction des températures estimées dans le démarreur, on utilise des modèles thermiques préenregistrés, et/ou des tables de mesures déterminées à partir de mesures physiques relatives aux températures du démarreur dans différentes conditions d'utilisation. Par exemple, pour une température courante déterminée en un point du démarreur, les coefficients thermiques correspondants à la température courante sont identifiés par comparaison avec un modèle préétabli comprenant les valeurs de ces coefficients pour ladite valeur de température courante. Alternativement, si cette température et les coefficients associés ne sont pas disponibles dans ce modèle, la température la plus proche de la température courante peut être utilisée, ou encore les coefficients peuvent être déduits par interpolation du modèle préétabli.

Selon un mode de réalisation, la température $T_{balai}$ des balais du démarreur est identifiée comme une des températures les plus critiques du démarreur. En effet, un trop fort échauffement des balais risque de les endommager, réduisant en conséquence la durée de vie et les performances du démarreur. On identifie alors à l'avance une valeur de température critique $T_{balai\_MAX}$ à ne jamais atteindre. Cette valeur peut par exemple être identifiée par rapport à des tables de mesures ou des simulations thermiques du démarreur préétablies.

Afin de ne pas atteindre la valeur de température $T_{balai\_MAX}$, on calcule à chaque instant l'intervalle de temps $\Delta t_{MAX}$ restant avant que cette température ne soit atteinte. L'intervalle de temps $\Delta t_{MAX}$ se rapporte ici à un intervalle de temps séparant un temps courant $t_c$ se rapportant à la température courante des balais $T_{balai\_courant}$, d'un instant $t_{max}$ se rapportant à l'atteinte de la température critique $T_{balai\_MAX}$. Avantageusement, la prédiction du temps $\Delta t_{MAX}$ restant permet alors de prendre une décision, concernant une stratégie de gestion du démarreur, par exemple l'inhibition de l'arrêt automatique du moteur thermique, nécessitant l'utilisation ultérieure du démarreur lors d'un démarrage consécutif et donc un potentiel échauffement.

On suppose, de plus, que les températures du stator 201 $T_{stator}$ et du rotor 202 $T_{rotor}$ du démarreur, varient peu autour de leur valeur d'initialisation : $T_{rotor} \approx T_{rotor\_ini}$ et $T_{stator} \approx T_{stator\_ini}$. Avantageusement, les valeurs initiales de température $T_{rolor\_ini}$ et $T_{stalor\_ini}$ des rotors et stators sont initialisées par rapport à la température du moteur thermique, des tables de mesures, des modèles thermiques ou encore à des simulations thermiques préétablies du rotor, du stator et des balais.

L'équation différentielle régissant la température des balais du démarreur dans le système d'équations différentielles précédemment établi $\dot{T}_{balai} = \tau_6 T_{rotor} + \tau_8 T_{stator} - \tau_7 T_{balai} + coeff \cdot iact$, peut donc être approximé de la manière suivante :

$$\dot{T}_{balai} \approx -\tau_7 \, T_{balai} + (\tau_6 \, T_{rotor\_ini} + \tau_8 \, T_{stator\_ini} + coeff \cdot iact)$$

Notons respectivement :

$$T = T_{balai} \quad ; \quad a = -\tau_7 \quad ; \quad b = (\tau_6 \, T_{rotor\_ini} + \tau_8 \, T_{stator\_ini} + coeff\,3 \cdot iact)$$

L'équation d'évolution de la température des balais peut alors être exprimée sous la forme $\dot{T} = aT + b$, où $T$ est la dérivée temporelle de la température $T$. La solution générale connue d'une telle équation est de la forme :

$$T(t) = K \, e^{a\,t} - \frac{b}{a}$$ (ou plus généralement : $T(t) = Ae^{Bt} + C$ où A= $K$, B=a, et $C = -\frac{b}{a}$ ).

On considère la solution de l'équation précédente à l'instant courant $t_c$, $T_c$ étant la valeur de température des balais à l'instant courant $t_c$ et $T_{MAX}$ la température seuil des balais à ne pas atteindre, se rapportant au temps $t_{max}$: $T_{MAX}=T(t=t_{max})=T_{balai\_MAX}$.

L'instant courant $t=t_c$ est choisi comme valeur d'initialisation du modèle thermique d'évolution des balais du démarreur, à $t = t_c$ :

$$T_c = T(t_c) = K \, e^{a\,t_c} - \frac{b}{a} \qquad \Rightarrow K = (T_c + \frac{b}{a}) \, e^{-a\,t_c} \qquad \Rightarrow$$

$$T(t) = (T_c + \frac{b}{a}) \, e^{a\,(t-t_c)} - \frac{b}{a}$$

Donc à $t = t_{MAX}$, $$T_{MAX} = T(t_{MAX}) = (T_c + \frac{b}{a}) \, e^{a\,(t_{MAX}-t_c)} - \frac{b}{a} \qquad \Rightarrow \frac{T_{MAX} + \frac{b}{a}}{(T_c + \frac{b}{a})} = e^{a\,(t_{MAX}-t_c)} \quad > 0$$  En posant $\Delta T_{MAX}= t_{max}-t_c$, l'intervalle de temps séparant l'instant courant $t_c$ de l'atteinte de l'instant $t_{max}$ correspondant à l'atteinte

$$\Delta t_{MAX} = t_{MAX} - t_c = \frac{1}{a} \ln \left[ \frac{T_{MAX} + \frac{b}{a}}{T_c + \frac{b}{a}} \right]$$

de   la   température   $T_{max}$   on   trouve   alors :

$$\Rightarrow \Delta t_{MAX} = -\frac{1}{\tau_7} \ln \left[ \frac{-\tau_7 \, T_{balai\_MAX} + \tau_6 \, T_{rotor\_ini} + \tau_8 \, T_{stator\_ini} + coeff\,3 \cdot iact}{-\tau_7 \, T_{balai\_courant} + \tau_6 \, T_{rotor\_ini} + \tau_8 \, T_{stator\_ini} + coeff\,3 \cdot iact} \right].$$

Avantageusement, cette formule permet de prédire en temps réel la durée d'activation limite ou restante du démarreur avant sa surchauffe.

Par ailleurs, il est entendu qu'afin d'affiner ce calcul, d'autres éléments constitutifs du démarreur, par exemple l'électronique de puissance du démarreur peuvent être pris en compte. Les pertes thermiques de ces éléments peuvent elles aussi être modélisées, via des puissances thermiques, des capacités thermiques, des résistances thermiques selon un circuit équivalent du même type que celui proposé sur la figure 2. Ainsi, l'équation permettant de calculer $\Delta t_{MAX}$ est ici proposée à titre illustratif.

Avantageusement, toute équation régissant le calcul de cet intervalle de temps $\Delta t_{MAX}$ est implémentée dans le deuxième module 2.

Avantageusement, la détermination de l'intervalle de temps $\Delta t_{MAX}$ permet par la suite d'envisager une stratégie de gestion du démarreur. Ainsi, selon un mode de réalisation, dans le cadre d'une stratégie « Stop-and-Start », si l'on constate à l'instant courant $t_c$, que la durée $\Delta t_{MAX}$ d'activation restante du démarreur avant surchauffe est par exemple inférieure à une durée standard connue de redémarrage, une stratégie de gestion du démarreur consiste à empêcher l'arrêt du moteur thermique, sachant qu'un redémarrage conduira alors une surchauffe du démarreur.

Selon un autre mode de réalisation, le calcul de $\Delta t_{MAX}$ permet pour tout véhicule de s'assurer que le démarreur a suffisamment refroidi et que l'on dispose d'un temps d'activation du démarreur suffisant, par rapport à un temps de démarrage connu, pour autoriser une tentative de démarrage sécurisée du véhicule. Les modes de réalisations précédemment décrits, permettent donc à la fois de se prémunir d'une montée excessive en température des démarreurs et d'améliorer la sûreté de fonctionnement des véhicules automobiles.

**Revendications**

1. Procédé de gestion du fonctionnement d'un démarreur configuré pour démarrer un moteur thermique comprenant :

   - une étape de détermination d'une première valeur de température ($T_1$) à un point du démarreur;
   - une étape de détermination des coefficients thermiques correspondants à la première valeur de température ($T_1$) d'un modèle thermique préétabli décrivant l'évolution dans le temps de la température audit point du démarreur $T(t)=Ae^{Bt}+C$, $T(t)$ désignant la température audit point du démarreur à l'instant t, $A$, $B$ et $C$ désignant lesdits coefficients thermiques à la température $T(t)$, en utilisant des modèles thermiques préenregistrés et/ou des tables de mesures déterminées à partir de mesures physiques, comprenant les valeurs de ces coefficients pour différentes valeurs de température;
   - une étape de calcul du temps restant pour que la température audit point du démarreur atteigne une deuxième valeur de température ($T_2$) à partir de la première valeur de température ($T_1$), la deuxième valeur de température ($T_2$) étant supérieure à la première valeur de température ($T_1$), sur la base du modèle thermique préétabli avec les coefficients thermiques déterminés,
   - une étape d'inhibition du démarreur, au moins pour une période de temps prédéfinie, lorsque ledit temps restant est inférieur à une durée de temps prédéterminée.

2. Procédé selon la revendication 1, dans laquelle le temps restant est donné par la quantité suivante :

$$\frac{1}{B} Ln\left(\frac{T_2 - C}{T_1 - C}\right),$$

où $Ln$, $T_2$, et $T_1$ désignent, respectivement, le logarithme népérien, la deuxième valeur de température et la première valeur de température.

3. Procédé selon la revendication 1 ou 2, comprenant en outre une étape de mesure de la première valeur de température ($T_1$) par un capteur disposé au niveau dudit point du démarreur.

4. Procédé selon la revendication 1 ou 2, comprenant en outre une étape d'estimation de la première valeur de température ($T_1$) selon un modèle de prédiction de la température audit point du démarreur.

5. Procédé selon l'une quelconque des revendications précédentes, où

   - le coefficient thermique A est égal à ($T_1$-$C$)$e^{-Bt_1}$, $T_1$ étant la première valeur de température à l'instant $t_1$ ;

   - le coefficient thermique B est égal à $-\dfrac{1}{C_{balai}}\left[\dfrac{1}{R_{rotor}}+\dfrac{1}{R_{stator}}\right]$ où

     ∘ $C_{balai}$ est la capacité thermique des balais du démarreur,
     ∘ $R_{rotor}$ est la résistance thermique du rotor du démarreur, et
     ∘ $R_{stator}$ est la résistance thermique du stator du démarreur,

   - le coefficient thermique C est égal à $-\dfrac{\left(\dfrac{T_{rotor\_ini}}{R_{rotor}\,C_{balai}}+\dfrac{T_{stator\_ini}}{R_{stator}\,C_{balai}}+\dfrac{P_{balai}}{C_{balai}}\cdot iact\right)}{B}$ où

     ∘ $P_{balai}$ est la puissance thermique des balais,
     ∘ $iact$=0 lorsque le démarreur est éteint, et $iact$=1 lorsque le démarreur est activé ; et
     ∘ $T_{rotor\_ini}$ et $T_{stator\_ini}$ étant, respectivement, une température initiale prédéterminée du rotor du démarreur et une température initiale prédéterminée du stator du démarreur.

**6.** Méthode selon la revendication précédente, où $T_{rotor\_ini}$ et $T_{stalor\_ini}$ sont égales à la température d'un moteur thermique associé au démarreur.

**7.** Procédé selon l'une quelconque des revendications précédentes, où les coefficients thermiques sont préétablis à différentes valeurs de températures dudit point du démarreur.

**8.** Procédé selon l'une quelconque des revendications précédentes, où la température en un point du démarreur est la température des balais du démarreur.

**9.** Procédé selon l'une quelconque des revendications précédentes, où ladite deuxième valeur de température est la température de surchauffe du démarreur.

**10.** Système de gestion du fonctionnement d'un démarreur configuré pour démarrer un moteur thermique, comprenant :

- des moyens configurés pour déterminer une première valeur de température ($T_1$), (T1) à un point du démarreur;
- des moyens configurés pour déterminer des coefficients thermiques correspondants à la première valeur de température ($T_1$) d'un modèle thermique préétabli décrivant l'évolution dans le temps de la température audit point du démarreur $T(t)=Ae^{Bt}+C$, $T(t)$ désignant la température audit point du démarreur à l'instant t, $A$, $B$ et $C$ désignant des coefficient thermiques à la température $T(t)$, en utilisant des modèles thermiques préenregistrés et/ou des tables de mesures déterminées à partir de mesures physiques, comprenant les valeurs de ces coefficients pour différentes valeurs de température; - des moyens configurés pour calculer le temps restant t pour que la température audit point d'un démarreur atteigne une deuxième valeur de température ($T_2$) à partir de la première valeur de température ($T_1$), la deuxième valeur de température ($T_2$) étant supérieure à la première valeur de température ($T_1$) sur la base du modèle thermique préétabli avec les coefficients thermiques déterminés,
- des moyens configurés pour inhiber le démarreur, au moins pour une période de temps prédéfinie, lorsque ledit temps restant est inférieur à une durée de temps prédéterminée.

**11.** Système selon la revendication 10, dans lequel le temps restant est donné par la quantité suivante :

$$\frac{1}{B} Ln\left(\frac{T_2 - C}{T_1 - C}\right),$$

où $Ln$, $T_2$, et $T_1$ désignent, respectivement, le logarithme népérien, la deuxième valeur de température et la première valeur de température.

**Patentansprüche**

**1.** Verfahren zum Verwalten des Betriebs eines Anlassers, der konfiguriert ist, um einen Verbrennungsmotor anzulassen, das Folgendes umfasst:

- einen Schritt des Bestimmens eines ersten Temperaturwerts ($T_1$) an einem Punkt des Anlassers;
- einen Schritt des Bestimmens der Wärmekoeffizienten, die dem ersten Temperaturwert ($T_1$) eines vorab erstellten Wärmemodells entsprechen, das die zeitliche Entwicklung der Temperatur an dem Punkt des Anlassers $T(t)=Ae^{Bt}+C$ beschreibt, wobei $T(t)$ die Temperatur in dem Punkt des Anlassers in dem Augenblick t bezeichnet, A, B und C die Wärmekoeffizienten bei der Temperatur $T(t)$ bezeichnen, indem vorab aufgezeichnete Wärmemodelle und/oder Tabellen von Messungen, die ausgehend von physischen Messungen bestimmt werden, verwendet werden, indem die Werte dieser Koeffizienten für unterschiedliche Temperaturwerte verglichen werden;
- einen Schritt des Berechnens der Zeit, die verbleibt, damit die Temperatur an dem Punkt des Anlassers einen zweiten Temperaturwert ($T_2$) ausgehend von dem ersten Temperaturwert ($T_1$) erreicht, wobei der zweite Temperaturwert ($T_2$) größer ist als der erste Temperaturwert ($T_1$), auf der Basis des Wärmemodells, das vorab mit den bestimmten Wärmekoeffizienten erstellt wird,
- einen Schritt des Inhibierens des Anlassers mindestens für eine vordefinierte Zeitspanne, wenn die restliche Zeit kleiner ist als eine vorbestimmte Zeitdauer.

**2.** Verfahren nach Anspruch 1, wobei die restliche Zeit von der folgenden Menge gegeben ist:

$$\frac{1}{B} Ln\left(\frac{T_2 - C}{T_1 - C}\right),$$

wobei $L_n$, $T_2$ und $T_1$ jeweils den natürlichen Logarithmus, den zweiten Temperaturwert und den ersten Temperaturwert bezeichnen.

3. Verfahren nach Anspruch 1 oder 2, das außerdem einen Schritt des Messens des ersten Temperaturwerts ($T_1$) durch einen Sensor, der im Bereich des Punkts des Anlassers angeordnet ist, umfasst.

4. Verfahren nach Anspruch 1 oder 2, das außerdem einen Schritt des Schätzens des ersten Temperaturwerts ($T_1$) gemäß einem Vorhersagemodell der Temperatur an dem Punkt des Anlassers umfasst.

5. Verfahren nach einem der vorhergehenden Ansprüche, wobei

- der Wärmekoeffizient A gleich $(T_1 - C)e^{-Bt_1}$ ist, wobei $T_1$ der erste Temperaturwert in dem Augenblick $t_1$ ist;

- der Wärmekoeffizient B gleich $-\dfrac{1}{C_{Bürste}}\left[\dfrac{1}{R_{Rotor}}+\dfrac{1}{R_{Stator}}\right]$ ist, wobei

  ◦ $C_{Bürste}$ die Wärmekapazität der Bürsten des Anlassers ist,
  ◦ $R_{Rotor}$ der Wärmewiderstand des Rotors des Anlassers ist, und
  ◦ $R_{Stator}$ der Wärmewiderstand des Stators des Anlassers ist,

- der Wärmekoeffizient C gleich $\dfrac{-\left(\dfrac{T_{Rotor\_ini}}{R_{Rotor}C_{Bürste}}+\dfrac{T_{Stator\_ini}}{R_{Stator}C_{Bürste}}+\dfrac{P_{Bürste}}{C_{Bürste}}.iact\right)}{B}$ ist, wobei

  ◦ $P_{Bürste}$ die Wärmeleistung der Bürsten ist,
  ◦ $iact$=0 ist, wenn der Anlasser ausgeschaltet ist und $iact$=1 ist, wenn der Anlasser aktiviert ist, und
  ◦ $T_{Rotor\_ini}$ und $T_{Stator\_ini}$ jeweils eine vorbestimmte anfängliche Temperatur des Rotors des Anlassers und eine vorbestimmte anfängliche Temperatur des Stators des Anlassers sind.

6. Verfahren nach dem vorhergehenden Anspruch, wobei $T_{Rotor\_ini}$ und $T_{Stator\_ini}$ gleich der Temperatur eines Verbrennungsmotors, der mit dem Anlasser verbunden ist, sind.

7. Verfahren nach einem der vorhergehenden Ansprüche, wobei die Wärmekoeffizienten vorab auf unterschiedlichen Temperaturwerten des Punkts des Anlassers festgelegt werden.

8. Verfahren nach einem der vorhergehenden Ansprüche, wobei die Temperatur an einem Punkt des Anlassers die Temperatur der Bürsten des Anlassers ist.

9. Verfahren nach einem der vorhergehenden Ansprüche, wobei der zweite Temperaturwert die Überhitzungstemperatur des Anlassers ist.

10. System zur Verwaltung des Betriebs eines Anlassers, der konfiguriert ist, um einen Verbrennungsmotor anzulassen, das Folgendes umfasst:

    - Mittel, die konfiguriert sind, um einen ersten Temperaturwert ($T_1$) an einem Punkt des Anlassers zu bestimmen;
    - Mittel, die konfiguriert sind, um Wärmekoeffizienten zu bestimmen, die dem ersten Temperaturwert ($T_1$) eines vorab festgelegten Wärmemodells entsprechen, das die zeitliche Entwicklung der Temperatur an dem Punkt des Anlassers $T(t)=Ae^{Bt}+C$ beschreibt, wobei $T(t)$ die Temperatur an dem Punkt des Anlassers in dem Augenblick t bezeichnet, A, B und C Wärmekoeffizienten bei der Temperatur $T(t)$ bezeichnen, indem vorab aufgezeichnete Wärmemodelle und/oder Tabellen von Messungen, die ausgehend von physischen Messungen bestimmt werden, verwendet werden, die die Werte dieser Koeffizienten für unterschiedliche Temperaturwerte umfassen;
    - Mittel, die konfiguriert sind, um die restliche Zeit t, damit die Temperatur an dem Punkt eines Anlassers einen zweiten Temperaturwert ($T_2$) ausgehend von dem ersten Temperaturwert ($T_1$) erreicht, zu berechnen, wobei der zweite Temperaturwert ($T_2$) größer ist als der erste Temperaturwert ($T_1$), auf der Basis des vorab mit den festgelegten Wärmekoeffizienten festgelegten Wärmemodells,
    - Mittel, die konfiguriert sind, um den Anlasser für mindestens eine vordefinierte Zeitspanne zu inhibieren, wenn die restliche Zeit kleiner ist als eine vorbestimmte Zeitdauer.

**11.** System nach Anspruch 10, wobei die restliche Zeit durch die folgende Menge gegeben ist : $\frac{1}{B} Ln\left(\frac{T_2 - C}{T_1 - C}\right),$ wobei $L_n$, $T_2$ und $T_1$ jeweils den natürlichen Logarithmus, den zweiten Temperaturwert und den ersten Temperaturwert bezeichnen.

**Claims**

**1.** A method of controlling operation of a starter configured for starting a heat engine, including:

- a step of determining a first temperature value ($T_1$) at a point of the starter;
- a step of determining thermal coefficients corresponding to the first temperature value ($T_1$) of a pre-established thermal model describing the development over time of the temperature at said point of the starter $T(t) = Ae^{Bt} + C$, $T(t)$ designating the temperature at said point of the starter at the instant $t$, $A$, $B$ and $C$ designating said thermal coefficients at the temperature $T(t)$, using prerecorded thermal models and/or measurement tables determined from physical measurements, including the values of these coefficients for different temperature values;
- a step of calculating the time remaining for the temperature at said point of the starter to reach a second temperature value ($T_2$) from the first temperature value ($T_1$), the second temperature value ($T_2$) being greater than the first temperature value ($T_1$) on the basis of the pre-established thermal model with the determined thermal coefficients,
- a step of inhibiting the starter, at least for a predefined period of time, when said remaining time is less than a predetermined period of time.

**2.** The method according to Claim 1, in which the remaining time is given by the following quantity:

$$\frac{1}{B} Ln\left(\frac{T_2 - C}{T_1 - C}\right),$$

in which $Ln$, $T_2$ and $T_1$ designate, respectively, the natural logarithm, the second temperature value and the first temperature value.

**3.** The method according to Claim 1 or 2, including in addition a step of measuring the first temperature value ($T_1$) by a sensor arranged at the level of said point of the starter.

**4.** The method according to Claim 1 or 2, including in addition a step of estimating the first temperature value ($T_1$) according to a prediction model of the temperature at said point of the starter.

**5.** The method according to any one of the preceding claims, in which

- the thermal coefficient A is equal to $(T_1 - C)e^{-Bt1}$, $T_1$ being the first temperature value at the instant $t_1$;
- the thermal coefficient B is equal to $-\dfrac{1}{C_{balai}}\left[\dfrac{1}{R_{rotor}} + \dfrac{1}{R_{stator}}\right]$, in which

  ◦ $C_{balai}$ is the thermal capacity of the brushes of the starter,
  ◦ $R_{rotor}$ is the thermal resistance of the rotor of the starter, and
  ◦ $R_{stator}$ is the thermal resistance of the stator of the starter,

- the thermal coefficient C is equal to $-\dfrac{\left( \dfrac{T_{rotor\_ini}}{R_{rotor}\,C_{balai}} + \dfrac{T_{stator\_ini}}{R_{stator}\,C_{balai}} + \dfrac{P_{balai}}{C_{balai}}\cdot iact \right)}{B}$ in which

- ○ $P_{balai}$ is the thermal power of the brushes,
- ○ *iact*=0 when the starter is off, and *iact*=1 when the starter is activated; and
- ○ $T_{rotor\_ini}$ and $T_{stator\_ini}$ being, respectively, and initial predetermined temperature of the rotor of the starter and an initial predetermined temperature of the stator of the starter.

6. The method according to the preceding claim, in which $T_{rotor\_ini}$ and $T_{stator\_ini}$ are equal to the temperature of a heat engine associated with the starter.

7. The method according to any one of the preceding claims, in which the thermal coefficients are pre-established at different temperature values of said point of the starter.

8. The method according to any one of the preceding claims, in which the temperature at a point of the starter is the temperature of the brushes of the starter.

9. The method according to any one of the preceding claims, in which said second temperature value is the overheating temperature of the starter.

10. A system for controlling the operation of a starter configured for starting a heat engine, including:

   - means configured to determine a first temperature value ($T_1$), ($T_1$) at a point of the starter;
   - means configured to determine thermal coefficients corresponding to the first temperature value ($T_1$) of a pre-established thermal model describing the development over time of the temperature at said point of the starter $T(t) = Ae^{Bt} + C$, $T(t)$ designating the temperature at said point of the starter at the instant $t$, A, $B$ and C designating thermal coefficients at the temperature $T(t)$, using prerecorded thermal models and/or measurement tables determined from physical measurements, including the values of these coefficients for different temperature values;
   - means configured to calculate the time remaining t for the temperature at said point of a starter to reach a second temperature value ($T_2$) from the first temperature value ($T_1$), the second temperature value ($T_2$) being greater than the first temperature value ($T_1$) on the basis of the pre-established thermal model with the determined thermal coefficients,
   - means configured to inhibit the starter, at least for a predefined period of time, when said remaining time is less than a predetermined period of time.

11. The system according to Claim 10, in which the remaining time is given by the following quantity:

$$\frac{1}{B}\,Ln\left(\frac{T_2 - C}{T_1 - C}\right)$$

in which *Ln*, $T_2$, and $T_1$ designate, respectively, the natural logarithm, the second temperature value and the first temperature value.

FIG. 1

EP 3 120 012 B1

FIG. 2

EP 3 120 012 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 10347683

- DE 102007015236 A1